# EUROPEAN PATENT APPLICATION

(11) **EP 1 605 370 A1**
(43) Date of publication of application: **14.12.2005**
(21) Application number: 05010906.5
(22) Date of filing: 19.05.2005
(51) Int. Cl.: G06F 17/30

(54) **Search of recently accessed documents**

(30) Priority: 27.05.2004 US 854839
(71) Applicant: SAP AG, 69190 Walldorf (DE)
(72) Inventor: Ritter, Gerd M., 69124 Heidelberg (DE)
(74) Representative: Müller-Boré & Partner Patentanwälte

(57) **Abstract**

One implementation provides a method to search for electronic documents previously accessed by a user. In this implementation, the method includes displaying a set of options for predefined time periods and a set of options for predefined document properties in a graphical user interface (GUI) and receiving user input selecting one of the options for a predefined time period and one of the options for a predefined document property. Upon receipt of the user input, the method further includes retrieving a set of entries, each entry being associated with an electronic document previously accessed by the user within the selected time period and having the selected document property. The method further includes presenting a display of the retrieved entries to the user within the GUI.

## Description

### TECHNICAL FIELD

This description relates to searching for recently accessed documents in computing systems.

### BACKGROUND

Today's information technology environment provides many products and applications that are services based. For example, an enterprise resource planning (ERP) infrastructure may provide products and applications for purchase order management, inventory management, delivery management, sales/service order management, human capital management, financial management, and the like. In addition, the ERP infrastructure may also provide services for use in a customer relationship management (CRM) system. For example, the ERP infrastructure may provide services for an interaction center, in which an agent interacts with customers (or potential customers) via telephone, email, fax, or interactive chat communication channels.

Often, a user of the ERP infrastructure will have a need or desire to view or modify documents that have been previously accessed by the user. For example, if the user has previously created a sales order document while interacting with a customer, the user may want to access the sales order document if the customer calls back three days later and has a question about the sale.

One specific application in the prior art allows a user to view or modify previously accessed documents. The user may select a "History" button displayed in a graphical user interface (GUI) to view a set of predefined time periods, and may then select one of these time periods. For example, the user may select a predefined time period of "Last week" to see a list of documents accessed by the user within the last week. The list typically includes the name and/or location of these documents.

### SUMMARY

Various implementations are described herein. One implementation provides a method to search for electronic documents previously accessed by a user. In this implementation, the method includes displaying a set of options for predefined time periods and a set of options for predefined document properties in a graphical user interface (GUI) and receiving user input selecting one of the options for a predefined time period and one of the options for a predefined document property. Upon receipt of the user input, the method further includes retrieving a set of entries, each entry being associated with an electronic document previously accessed by the user within the selected time period and having the selected document property. The method further includes presenting a display of the retrieved entries to the user within the GUI.

The details of one or more implementations of the invention are set forth in the accompanying drawings and the description below. Various advantages will be apparent from the description and drawings, and from the claims.

### DESCRIPTION OF DRAWINGS

FIG. 1 is a block diagram of a system that may be used to search for recently accessed documents, according to one implementation.
FIG. 2 is a diagram of a search table that is contained within the central storage system shown in FIG. 1, according to one implementation.
FIG. 3A through FIG. 3E are screen diagrams of graphical user interfaces (GUI's) displayed on one or more of the computing systems shown in FIG. 1, according to certain implementations.
FIG. 4 is a block diagram of a computing device that may be included within one or more of the computing systems shown in FIG. 1, according to one implementation.

### DETAILED DESCRIPTION

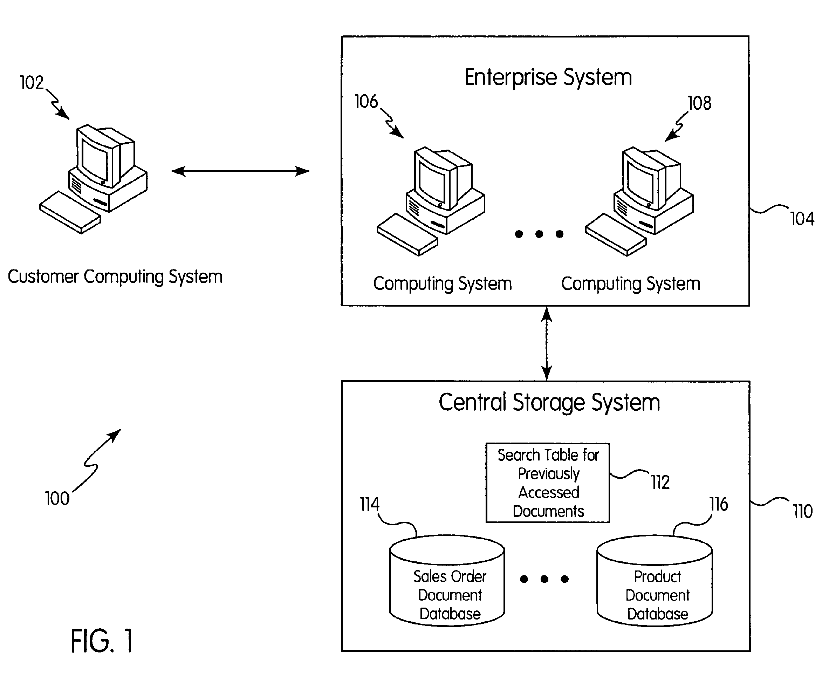

FIG. 1 is a block diagram of a system 100 that may be used to search for recently accessed documents, according to one implementation. In this implementation, a customer interacts with an agent during an interactive session. For example, the customer may engage in an interactive telephone or chat session with a call-center agent to ask for help with a problem that the customer has identified. The customer uses a computing system 102 to interact with the agent. The agent uses a computing system 106 or 108 within an enterprise system 104. During the interaction with the customer, the agent may wish to access an electronic document, such as a business document, that the agent previously viewed or modified during the given interaction with the customer or during a prior interaction. For example, the agent may wish to view a sales order that was recently completed within the last few days for a specific customer. To do so, the agent may use the computing system 106 or 108 to initiate a search of a search table 112 containing entries that are associated with electronic documents that the agent has previously accessed. These electronic business documents are stored within a sales order document database 114, a product document database 116, or any other database (not shown) that contains information that is used by the enterprise system 104. In one implementation, the electronic business documents contain information related to prior interactions between the agent and a particular customer, such as sales order information or product search information related to a customer request.

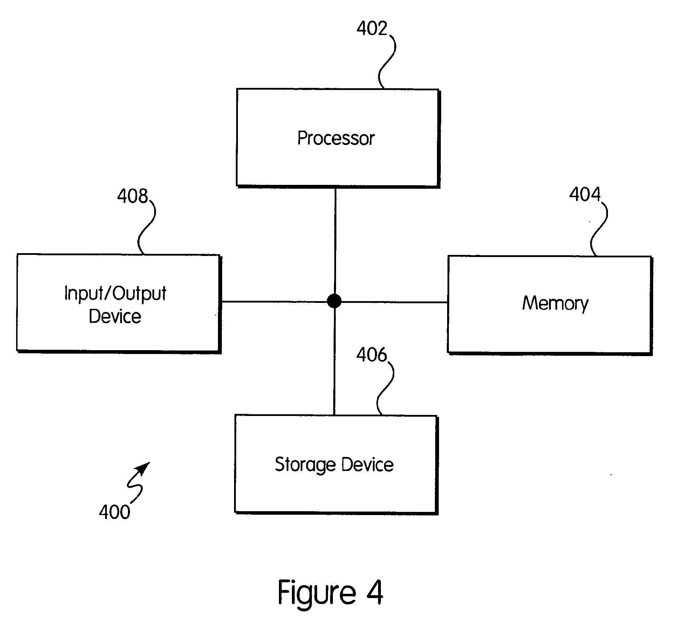

In FIG. 1, the customer may interact with the agent in the enterprise system 104 using various different modes of communication. For example, the customer may use the computing system 102 to communicate with the agent in the enterprise system 104 by email, fax, or phone. Alternatively, the customer may engage in an interactive chat session with the agent. When using the computing system 106 or 108, the agent is able to respond to the customer using these and other modes of communication. In one implementation, the computing systems 102, 106, and 108 contain the computing device 400 shown in FIG. 4. In one implementation, the customer initiates the interaction with the agent by generating a request that is sent from the computing system 102 to the enterprise system 104. In one implementation, the enterprise system 104 contains a server management system (not shown) that interacts with each agent computing system 106 and 108. In this implementation, the server management system helps manage and oversee the interaction between the customer computing system 102 and the agent computing systems 106 and 108. The agent computing systems 106 and 108 may continually interact with the server management system during the course of any given interaction.

A central storage system 110 contains the search table 112 having entries associated with business documents previously accessed by the agent, the sales order document database 114, the product document database 116, and any other databases (not shown) or persistency areas (e.g., archives) that contain information used by the enterprise system 104. For example, in some implementations, the central storage system 110 may also include a human resources database, a financial accounts database, or the like. Each of these databases may include documents that have been recently accessed (i.e., viewed and/or modified) by the agent. The search table 112 contains a set of entries associated with these recently accessed documents. In one implementation, the set of entries are included within a search table. Using the computing system 106 or 108, the agent may search these entries contained within the search table 112 using a graphical user interface. For example, the agent may provide one or more search terms to search these entries. Subsequently, the agent may select one of these entries and access the associated document contained in the respective database of the central storage system 110, such as the sales order document database 114 or the product document database 116.

The entries contained within the search table 112 are added and indexed as documents are added to the other databases contained in the central storage system 110, such as the sales order document database 114 and the product document database 116. Either or both of the enterprise system 104 or the central storage system 110 may format the information to be indexed into the entries when they are stored in the search table 112. For example, when a new document is stored within the central storage system 110, the enterprise system 104 may map certain field information into one or more fields of an individual entry to be stored within the search table 112, wherein the individual entry is associated with the newly stored document. In addition, the central storage system 110 may populate one or more fields of the individual entry with information (e.g., date/time information) as it is stored within the search table 112.

The enterprise system 104 and/or central storage system 110 also keep the entries contained within the search table 112 current, according to one implementation. In addition, when documents are deleted from the central storage system 110, their corresponding entries are deleted from the search table 112 as well. In one implementation, the entries contained within the search table 112 are also maintained and stored in memory resident within the computing system 106 or 108. In this implementation, the computing system 106 or 108 is able to quickly access these entries in memory that is resident on the respective system. When the computing system 106 or 108 is started, it reads the entries contained in the search table 112 and stores these entries in resident memory. Subsequently, the computing system 106 or 108 synchronizes the entries stored in its resident memory with the entries contained in the search table 112.

The system 100 shown in FIG. 1 allows an agent using the computing system 106 or 108 to search for documents that the agent has previously accessed within the search table 112. The search table 112 may contain up to a predetermined number of entries that are each associated with one of the documents stored in a database within the central storage system, such as the sales order document database 114 or the product document database 116. An administrator of the central storage system 110 typically configures the maximum number of entries that can be stored within the search table 112. Typically, this maximum number provides the agent with a great deal of flexibility in searching for entries associated with previously accessed documents. However, this maximum number typically is not so high as to overly limit the time required to search the table 112. Various different implementations provide varying sizes of the search table 112.

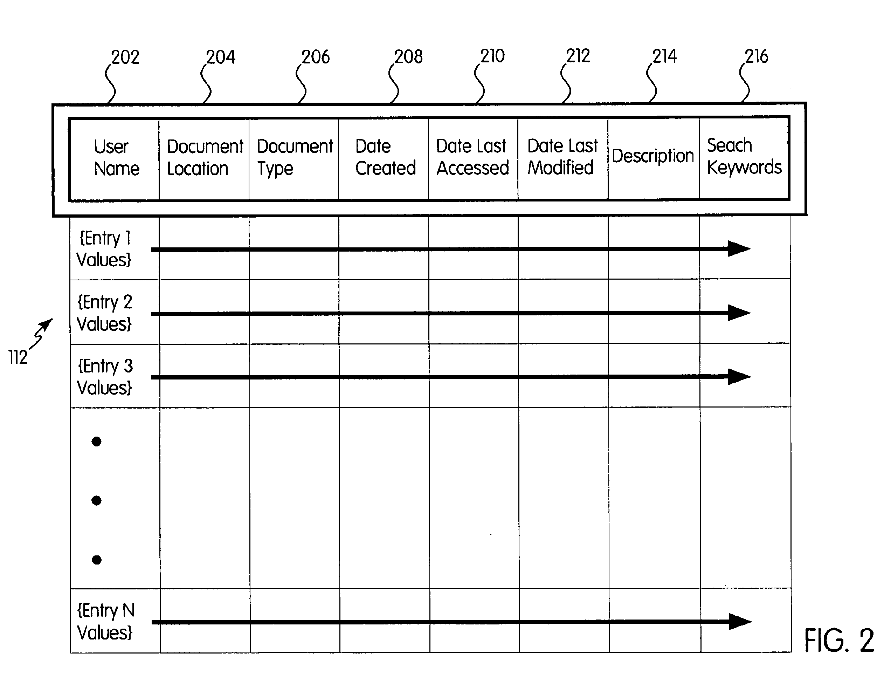

FIG. 2 is a diagram of the search table 112 that is contained within the central storage system 110 shown in FIG 1, according to one implementation. In FIG. 2, the search table 112 has "N" number of entries that each contain values for the fields 202, 204, 206, 208, 210, 212, 214, and 216. As such, every entry that is stored within the search table 112 has a specific value for each of these fields, and every entry is associated with one of the documents stored in a database, such as the database 114 or 116. In other implementations, the search table 112 may contain more or fewer fields than those shown in FIG. 2, as determined by an administrator of the system 100.

Each entry contains a value for the field 202 that provides the name of the user who has accessed the document associated with the given entry. Each entry in the search table 112 corresponds to a specific user. If a particular document has been accessed by two different users, the search table 112 will contain two distinct entries, one for each user.

Each entry also contains values for the fields 204 and 206 that provide the location and type for the document associated with the entry. For example, a value for the field 204 may provide the specific location of a document contained in the sales order document database 114. A value for the field 206 may then indicate that the document is a sales order document (as opposed to a product document). The document type is a property of the document associated with the given entry.

Each entry additionally contains values for the fields 208, 210, and 212. The value for the field 208 specifies the date/time when the document associated with a given entry was created. For example, if a brand new document is added to or created within the sales order document database 114 and an associated entry is to be added within the search table 112, the value for the field 208 will specify when the new document was created within the sales order document database 114. The value for the field 210 specifies the date/time in which the user last accessed the associated document. This value is updated every time the user reads or modifies the associated document. The value for the field 212, however, is only updated when the user modifies the associated document.

The values of the fields 214 and 216 specify the description of and the keywords for the document associated with a given entry. The keywords specified by the value of the field 216 may include any words, phrases, or numbers that are contained within the associated document, according to one implementation. These keywords may be provided by an indexing application that extracts the keywords from the associated document when it is initially stored in one of the databases contained in the central storage system 110. This application may be operable on either the central storage system 110 or the enterprise system 104. In one implementation, the keywords specified by the value of the field 216 do not include any keywords that are contained in either the name or the title of the associated document. Sometimes, the name or the title of the associated document contains certain keywords relating to the content of the document. In this implementation, the keywords specified by the value of the field 216 include those keywords provided in the body or remaining content of the associated document.

As discussed previously, the size of the search table 112 may be determined and/or configured by an administrator. Entries may be stored within the search table 112 in different forms. For example, in one implementation, entries are stored in a first-in-first-out (FIFO) fashion. In this implementation, a new entry is added as a new row at the top of the search table 112. The new entry contains values for each of the fields 202, 204, 206, 208, 210, 212, 214, and 216. If the number of entries contained within the search table 112 has reached a predetermined maximum, the oldest entry (i.e., the bottom row of the search table 112) is removed from the search table 112 to make room for the newly added entry. In this implementation, the newest and most recent entries are located in the top-most rows of the search table 112. These entries are associated with the most recently accessed documents.

In one implementation, the central storage system 110 avoids inserting duplicate entries for a common user within the search table. Duplicate entries are those containing the same values for the fields 202, 204, 214, and 216, according to one implementation. For example, if an agent accesses a document for the first time, a new entry associated with this document is inserted into the search table 112. At a later point in time, if the agent again accessed the document, a separate entry is not added to the search table 112. Instead, the original entry is simply updated. For instance, if the agent opened and modified the document, the values for the fields 210 and 212 in the associated entry are updated.

In one implementation, applications that are operational on either of the computing systems 106 or 108 provides the values for certain fields of entries that are to be stored within the search table 112, while the central storage system 110 provides the values for other fields. For example, if an agent using the computing system 106 accesses a document contained in the sales order document database 114 for the first time, the computing system 106 may send a request to the central storage system 110 to add a new entry to the search table 112, such that the new entry is associated with the sales order document. In this request, the computing system 106 may include values of the fields 202, 214, and 216 for this particular entry. Before the entry is added to the search table 112, the central storage system 110 is capable of providing the values of the fields 204, 206, 208, 210, and 212. The central storage system 110 is capable of determining the location and type of the document associated with the entry to be added in the search table 112, because the documents are stored in one of the databases in the central storage system 110. As such, the central storage system 110 is capable of providing the values of the fields 204 and 206. Additionally, the central storage system 110 is capable of determining date/time information and therefore providing values for the fields 208, 210, and 212. In one implementation, the central storage system 110 is further capable of providing the values of the field 216 for entries that are added to the search table 112. In this implementation, the central storage system 110 uses an indexing application to determine search keywords of documents when they are added to one of the databases, such as the database 114 or 116. In another implementation, this indexing application is resident on the enterprise system 104.

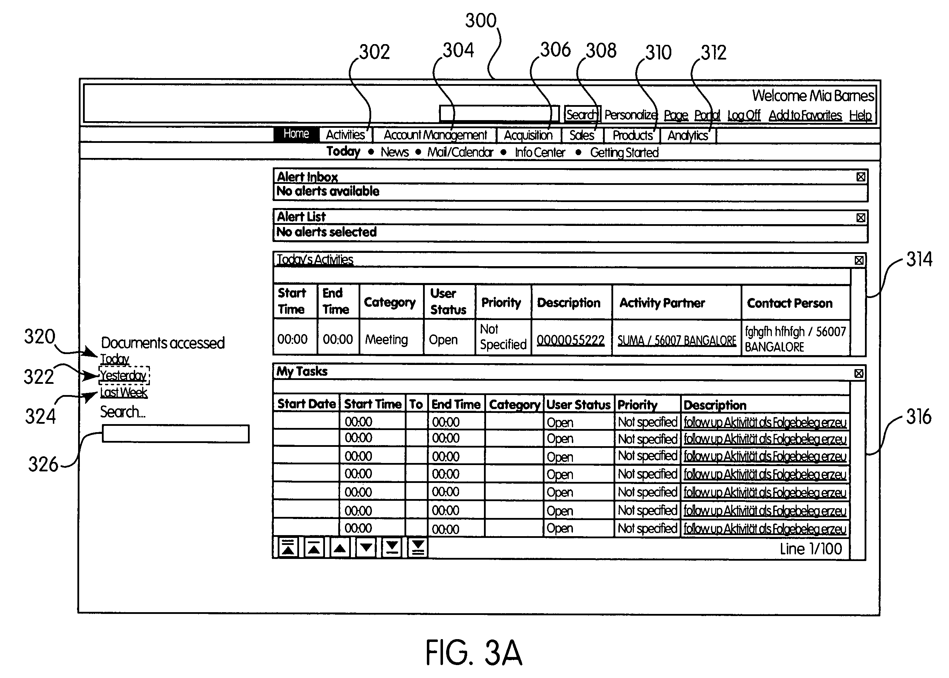

FIG. 3A through FIG. 3E are screen diagrams of graphical user interfaces (GUI's) displayed on the computing systems 106 and/or 108, according to certain implementations. In these implementations, an agent using the computing system 106 or 108 in the enterprise system 104 may uses these GUI's to search for documents previously accessed by the agents, such as sales order documents.

In FIG. 3A, a window 300 is displayed on the computing system 106 or 108. As shown in the example of FIG. 3A, the window 300 is displayed as part of an Enterprise Resource Planning (ERP) application. An ERP application provides a user, such as a call-center or back-office agent, with many run-time functions when interacting with customers (or potential customers). For example, the agent may use the ERP application to manage various customer accounts, to process sales or service orders, to view product information, to manage resources, and the like. The window 300 includes various buttons 302, 304, 306, 308, 310, and 312 that are associated with various functions within the ERP application.

Upon selection of the button 302, the GUI displays to the agent an activity management screen, wherein a default list (such as a list of the agent's upcoming activities) is displayed. These activities may include sales or marketing calls to potential customers. Upon selection of the button 304, the GUI displays to the agent a list of customer or other accounts that have been created by or assigned to the agent. The GUI also displays a set of account management options to the agent.

Upon selection of the button 306, the GUI displays to the agent a list of acquisition opportunities that have been previously identified by the agent or by other agents working within the enterprise system 104.

Upon selection of the button 308, the GUI displays to the agent a list of pending and/or completed sales orders. Upon selection of the button 310, the GUI displays to the agent a list of products and product information. The agent is able to search for products and product information using various keyword and/or attribute criteria. The agent may need to conduct such a search during a real-time interaction with a customer. Upon selection of the button 312, the GUI displays various analytical reports to the agent. For example, the GUI may display the average sales in the agent's division over a three-week period.

Upon selection of one of the buttons 302, 304, 306, 308, 310, or 312, the agent may create, select, modify, or delete one or more of the various documents in the central storage system 110 shown in FIG 1. These documents are stored in one of the databases contained within the central storage system 110, such as the sales order document database 114 or the product document database 116. For example, when the agent selects the button 308, the agent may use the GUI to access a document within the sales order document database 114. Upon doing so, either a new entry associated with the document is created and added to the search table 112, or an existing entry within the search table 112 is updated as described previously.

The window 300 also contains a number of links 320, 322, 324 and a search text-entry field 326. The links 320, 322, 324 comprise selectable options within the GUI. The agent may use these links 320, 322, 324 and text-entry field 326 to search for entries that are associated with documents previously accessed by the agent while using the ERP application. In one implementation, the links 320, 322, 324 and the text-entry field 326 are persistently displayed within the GUI when the agent selects any of the buttons 302, 304, 306, 308, 310, or 312. By selecting one of the links 320, 322, 324 or by entering input into the text-entry field 326, the agent is able to specify a particular search attribute relating to documents that have been previously accessed. For example, if the agent selects one of the links 320, 322, or 324, the agent is able to specify a specific, predefined time period in which these documents have been previously accessed. By selecting the link 320, the agent specifies a time period for documents that have been accessed today. By selecting the link 322, the agent specifies a time period for documents that were accessed yesterday. By selecting the link 324, the agent specifies a time period for documents that have been accessed during the last week. The agent may also enter textual input into the text-entry field 326 to specify an attribute relating to documents previously accessed. For example, the agent may enter one or more search keywords or criteria within the text-entry field 326.

After the agent has selected one of the links 320, 322, 324 or has entered text into the text-entry field 326, the search table 112 on the central storage system 110 is accessed to retrieve a set of entries that are each associated with a document previously accessed by the agent. Each of these entries also specifies the particular attribute entered by the agent. For example, if the agent selected the link 320, each of the entries would specify a time period for an associated document that was previously accessed by the agent today. The value of the field 210 for the entry, as shown in FIG. 2, would specify that the document associated with the entry was last accessed during the current day. If the agent were to select a link (not shown) to specify an attribute for documents modified during the current day, the value of the field 212 for a matching entry would specify that the associated document had been modified during the current day. If the agent had entered one or more keywords into the text-entry field 326, each retrieved entry would contain one or more of those keywords within the value of the field 216 of that entry.

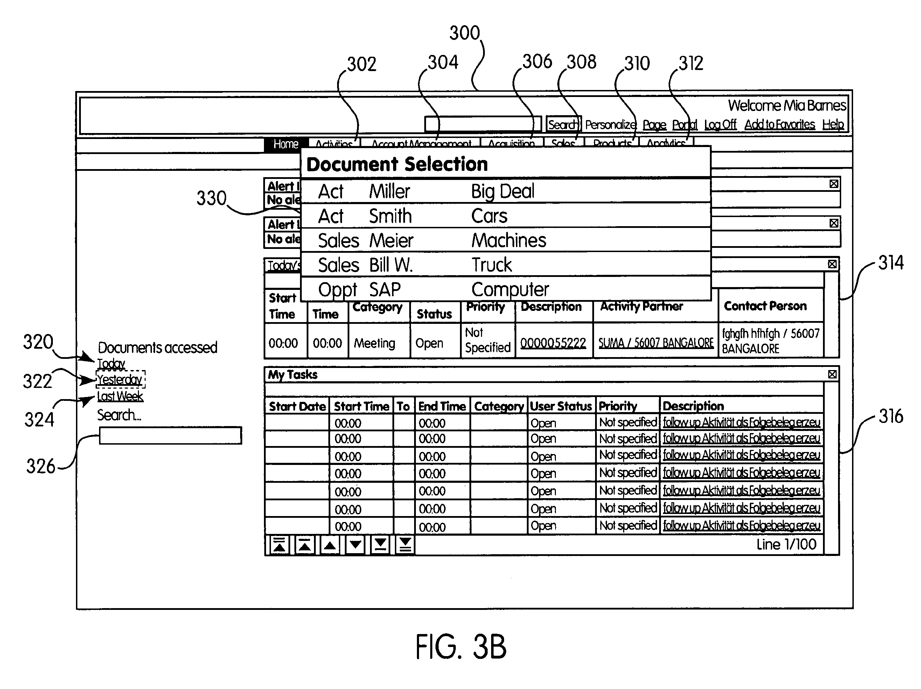

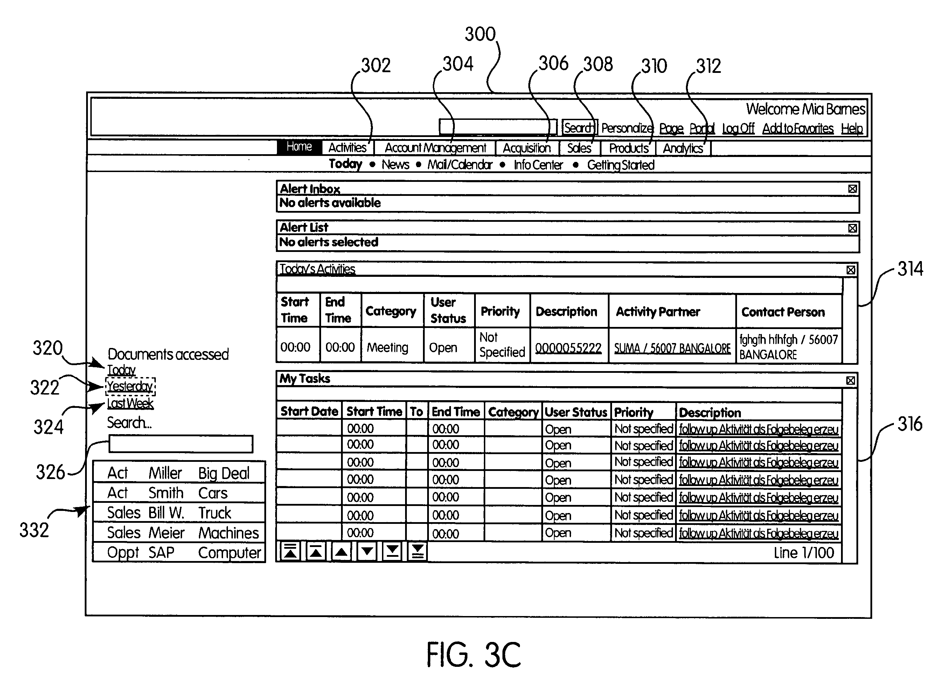

In addition to specifying the particular attribute, the retrieved entries would also each specify a set of keywords that are contained within the document associated with that entry. These keywords are included within the field 216 for each of these entries. The keywords for each of the retrieved entries are then displayed to the agent within the GUI. These keywords may be displayed in a pop-up window, such as in a pop-up window 330 shown in FIG 3B, or may alternately be shown directly below the text-entry field 326, such as in a window area 332 shown in FIG. 3C. As noted previously, in one implementation, the keywords included within the field 216 for a given entry and displayed to the agent within the GUI are distinct from keywords includes within either a name or a title of the associated document. In this implementation, the keywords displayed in the GUI include keywords that are contained within the body or remaining content of the associated document.

Also shown in FIG. 3A are window areas 314 and 316 displayed within the GUI to the agent. The window area 314 includes information relating to the current day's activities in general (e.g., meetings), while the window area 316 includes information relating to the current set of tasks assigned to the agent.

In FIG. 3B, the agent has selected the link 322. By selecting the link 322, the agent has indicated a preference to search for all documents that the agent accessed yesterday. Upon selection, the central storage system 110 uses the search table 112 to return a set of entries that are associated with documents accessed by the agent yesterday. Information corresponding to these entries is displayed within a pop-up window 330. As shown, information for each entry is shown in one row of the window 330. The first column of each row contains information for the document type, which is a specific property of the associated document. The document type for the document associated with each entry is specified by the value of the field 206 of each entry, as shown in FIG. 2. As shown in FIG. 3B, the window 330 contains information for five distinct entries. The first two entries are associated with documents having a document type of "Act", representing activity documents. The next two entries are associated with documents having a document type of "Sales", representing sales order documents. The final entry is associated with a document having a document type of "Oppt", representing an acquisition opportunity document.

The second column within the window 330 includes various keywords that are associated with each of the entries. The keywords for the document associated with each entry are specified by the value of the field 216 for each entry. The third column of each row contains additional keywords or descriptions for the various entries. This information is specified by the values for the fields 214 and/or 216, as shown in FIG 2. In one implementation, the keywords that are displayed for the entries in the window 330 include personal and/or organizational names. For example, one of the entries displayed in the window 330 is associated with a sales order document for an individual named "Meier". This sales order relates to machine equipment. Another entry displayed in the window 330 is an acquisition opportunity document for an organization named "SAP". The acquisition opportunity relates to computer equipment.

In one implementation, the agent is able to select one of the entries displayed within the window 330. Upon selection, the enterprise system 104 sends a request to the central storage system 110 to retrieve the document associated with the selected entry. The central storage system 110 accesses the database in which the document is stored, such as the sales order document database 114, and sends this document back to the enterprise system 104 for use by the agent on the computing system 106 or 108.

FIG. 3C is a screen display of an alternate implementation of the GUI shown in FIG. 3B. In FIG. 3C, the information for the five entries associated with documents accessed by the agent yesterday is shown in a window area 332 rather than in the pop-up window 330 shown in FIG. 3B. The window area 332 is located beneath the text-entry field 326.

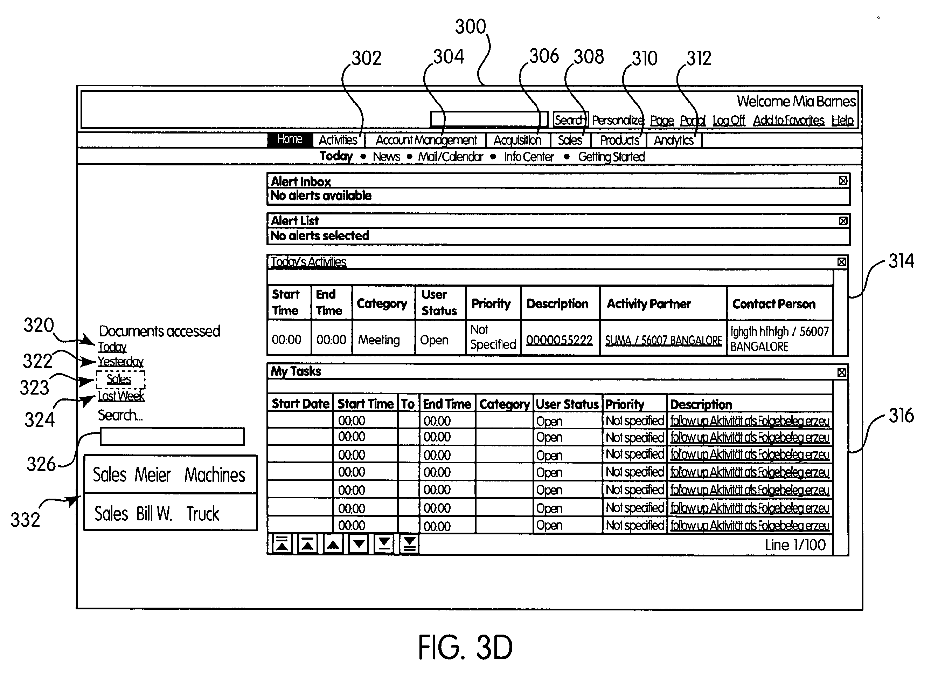

FIG. 3D is a screen display of another implementation of the GUI in which an additional link 323 is displayed to allow the agent to obtain a more narrow set of entries associated with previously accessed documents. As shown in previous figures, the window 300 shown in FIG. 3D contains the selectable links 320, 322 and 324. The agent is able to select any of these links to search for entries corresponding to documents that were previously accessed by the agent in a predefined time period. However, the agent is also able to select the link 323, which corresponds to a predefined document type. The predefined document type shown in FIG. 3D is a "sales" order document. The link 323 is indented within the GUI and is associated with the link 322 shown immediately above it. By selecting the link 323, the agent is able to specify both a predefined time period ("Yesterday") and a predefined document type ("Sales").

When the agent selects the link 323, the agent's computing system 106 or 108 accesses the search table 112 on the central storage system 110 to retrieve a set of entries. Each entry is associated with a document previously accessed by the user within the selected time period ("Yesterday"), and wherein each entry specifies the selected document type ("Sales"). These entries are provided to the agent, and the information related to these entries is displayed within the window area 332. As shown in FIG. 3D, only entries having a document type of "Sales" and having an association with documents accessed by the agent yesterday are displayed within the window area 332.

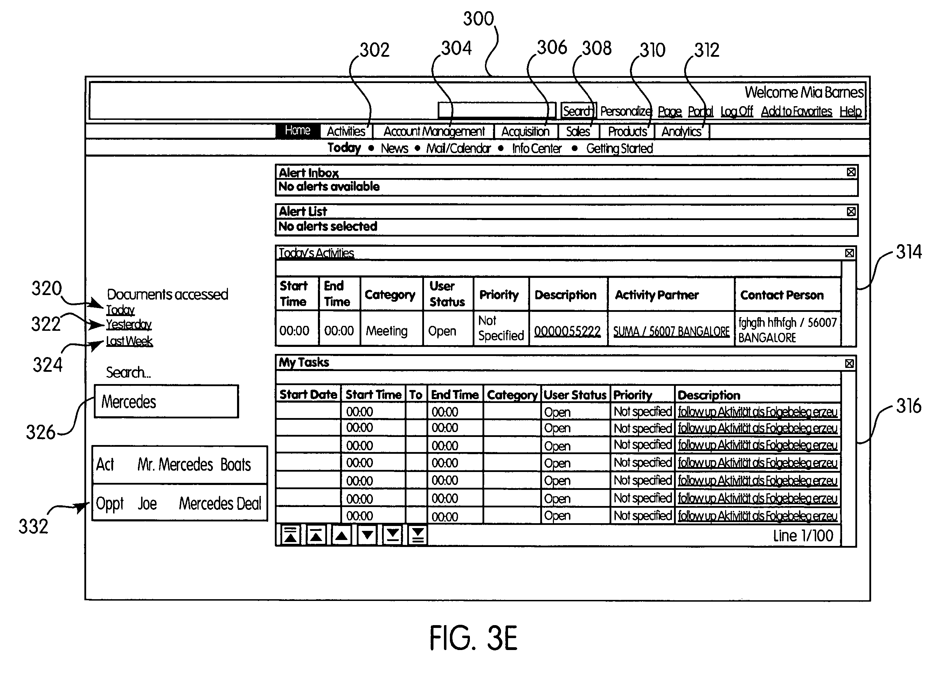

FIG. 3E is a screen diagram of a GUI in which the agent has entered a keyword "Mercedes" into the text-entry field 326 of the window 300. By entering this keyword, the agent has requested a search for all documents previously accessed by the agent that include the keyword "Mercedes". All entries contained within the search table 112 that include the keyword "Mercedes" in the field 216 (shown in FIG. 2) are returned and displayed within the window area 332. As shown, there are two such entries. The first entry is associated with an activity document in which an individual's name is "Mr. Mercedes". The second entry is associated with an acquisition opportunity document that includes a description of "Mercedes Deal". The agent may enter multiple keywords into the text-entry field 326 to narrow the search. In one implementation, the agent may also enter predefined time period keywords into the text-entry field 326. For example, the agent could enter the predefined time period keyword "Yesterday" to narrow the search to documents accessed by the agent yesterday.

FIG. 4 is a block diagram of a computing device 400 that may be included within the computing systems 102, 106, and/or 108 shown in FIG. 1, according to one implementation. The computing device 400 includes a processor 402, a memory 404, a storage device 406, and an input/output device 408. Each of the components 402, 404, 406, and 408 are interconnected using a system bus. The processor 402 is capable of processing instructions for execution within the computing device 400. In one implementation, the processor 402 is a single-threaded processor. In another implementation, the processor 402 is a multi-threaded processor. The processor 402 is capable of processing instructions stored in the memory 404 or on the storage device 406 to display graphical information for a GUI on the input/output device 408.

The memory 404 stores information within the computing device 400. In one implementation, the memory 404 is a computer-readable medium. In one implementation, the memory 404 is a volatile memory unit. In another implementation, the memory 404 is a non-volatile memory unit.

The storage device 406 is capable of providing mass storage for the computing device 400. In one implementation, the storage device 406 is a computer-readable medium. In various different implementations, the storage device 406 may be a floppy disk device, a hard disk device, an optical disk device, or a tape device.

In one implementation, a computer program product is tangibly embodied in an information carrier. The computer program product contains instructions that, when executed, perform various methods, such as those described above. The information carrier is a computer- or machine-readable medium, such as the memory 404, the storage device 406, or a propagated signal.

The input/output device 408 provides input/output operations for the computing device 400. In one implementation, the input/output device 408 includes a keyboard and/or pointing device. In one implementation, the input/output device 408 includes a display unit for displaying the various GUI's on the computing systems 106 and/or 108 shown in the preceding figures.

A number of implementations have been described above. Nevertheless, it will be understood that various modifications may be made without departing from the spirit and scope of these implementations. Accordingly, other implementations are within the scope of the following claims.

## Claims

1. A method to search for electronic documents previously accessed by a user, the method comprising:
in a graphical user interface (GUI), displaying a set of options for predefined time periods and a set of options for predefined document properties;
receiving user input selecting one of the options for a predefined time period and one of the options for a predefined document property;
upon receipt of the user input, retrieving a set of entries, each entry being associated with an electronic document previously accessed by the user within the selected time period and having the selected document property; and
presenting a display of the retrieved entries to the user within the GUI.

2. The method of claim 1, further comprising receiving user input selecting one of the displayed entries in the GUI to access the associated electronic document.

3. The method of claim 1 or 2, wherein the set of options for predefined document properties includes a set of options for predefined types of electronic documents.

4. The method of anyone of the claims 1 to 3, wherein each entry specifies a set of keywords, and wherein the method further comprises presenting a display of the set of keywords for each entry within the GUI.

5. The method of anyone of the preceding claims, wherein the set of options for predefined time periods includes a plurality of options for predefined time periods.

6. The method of anyone of the preceding claims, wherein the set of options for predefined document properties includes a plurality of options for predefined document properties.

7. A method to search for electronic documents previously accessed by a user, the method comprising:
in a graphical user interface (GUI), receiving user input that specifies a particular attribute relating to electronic documents previously accessed by the user;
upon receipt of the user input, retrieving a set of entries, each entry being associated with an electronic document previously accessed by the user that has the particular attribute specified by the user and that contains a set of keywords, each keyword being distinct from a name or a title of the electronic document; and
displaying to the user the set of keywords for each entry within the GUI.

8. The method of claim 7, wherein:
receiving user input includes receiving user input that specifies a plurality of attributes relating to electronic documents previously accessed by the user; and
each entry is associated with an electronic document previously accessed by the user that has the attributes specified by the user.

9. The method of claim 7 or 8, wherein each entry is associated with an electronic document previously accessed by the user within a predefined time period.

10. The method of anyone of the claims 7 to 9, wherein the particular attribute is a time period, and wherein each entry is associated with an electronic document previously accessed by the user within the time period.

11. The method of anyone of the claims 7 to 10, wherein the particular attribute is a particular type of electronic document, and wherein each entry is associated with an electronic document of the particular type.

12. The method of anyone of the claims 7 to 11, wherein the set of keywords includes a plurality of keywords.

13. The method of anyone of the claims 7 to 12, wherein one of the keywords for each entry includes an organizational name or an individual name.

14. The method of anyone of the claims 7 to 13, wherein receiving user input that specifies a particular attribute includes receiving user input in a text-entry field.

15. The method of anyone of the preceding claims, wherein each entry is associated with an electronic document previously accessed by the user during an interaction with an individual, the electronic document containing information relating to the interaction.

16. The method of anyone of the preceding claims, wherein each entry specifies a description of the electronic document associated with that entry.

17. The method of anyone of the preceding claims, wherein each entry is associated with an electronic document previously modified and/or created by the user.

18. The method of anyone of the preceding claims, wherein the set of entries includes a plurality of entries.

19. The method of anyone of the preceding claims, wherein retrieving the set of entries includes retrieving the set of entries from a search table.

20. The method of claim 19, wherein the search table is contained within a database.

21. A computer program product tangibly embodied in an information carrier, the computer program product including instructions that, when executed, perform a method according to anyone of the preceding claims.
